Europäisches Patentamt

**European Patent Office**

Office européen des brevets

(19)

(11) **EP 1 145 116 B1**

(12) **EUROPÄISCHE PATENTSCHRIFT**

(45) Veröffentlichungstag und Bekanntmachung des Hinweises auf die Patenterteilung:
**16.10.2002   Patentblatt 2002/42**

(21) Anmeldenummer: **00925040.8**

(22) Anmeldetag: **09.03.2000**

(51) Int Cl.$^7$: **G06F 9/44**

(86) Internationale Anmeldenummer:
**PCT/DE00/00738**

(87) Internationale Veröffentlichungsnummer:
**WO 00/054148 (14.09.2000 Gazette 2000/37)**

(54) **SYSTEM UND VERFAHREN ZUR OBJEKTIDENTIFIZIERUNG IN VERTEILTEN HIERARCHISCHEN SYSTEMEN, INSBESONDERE IN AUTOMATISIERUNGSSYSTEMEN**

SYSTEM AND METHOD FOR IDENTIFYING OBJECTS IN DISTRIBUTED HIERARCHICAL SYSTEMS, ESPECIALLY AUTOMATION SYSTEMS

SYSTEME ET PROCEDE D'IDENTIFICATION D'OBJET DANS DES SYSTEMES HIERARCHIQUEMENT REPARTIS, NOTAMMENT DANS DES SYSTEMES D'AUTOMATISATION

(84) Benannte Vertragsstaaten:
**AT CH DE ES FR GB LI**

(30) Priorität: **09.03.1999   DE 19910527**

(43) Veröffentlichungstag der Anmeldung:
**17.10.2001   Patentblatt 2001/42**

(73) Patentinhaber: **SIEMENS AKTIENGESELLSCHAFT
80333 München (DE)**

(72) Erfinder:
  • **DIEZEL, Matthias
    D-90482 Nürnberg (DE)**
  • **LANGE, Ronald
    D-90766 Fürth (DE)**
  • **LANGKAFEL, Dirk
    D-91090 Effeltrich (DE)**
  • **SCHNEIDER, Karsten
    D-91054 Erlangen (DE)**

  • **WINDL, Helmut
    D-93077 Bad Abbach (DE)**
  • **BIEHLER, Georg
    D-90453 Nürnberg (DE)**
  • **LEINS, Ralf
    D-75228 Ispringen (DE)**
  • **ECKARDT, Dieter
    D-91074 Herzogenaurach (DE)**
  • **KRÄMER, Manfred
    D-90530 Wendelstein (DE)**
  • **BECKER, Norbert
    D-91058 Erlangen (DE)**
  • **DONNER, Albrecht
    D-09236 Markersdorf (DE)**

(56) Entgegenhaltungen:
**EP-A- 0 737 916**

Bemerkungen:
Derzeit sind die WIPO-Publikationsdaten A3 nicht verfügbar.

EP 1 145 116 B1

**Beschreibung**

Die Erfindung betrifft ein System und Verfahren zur Objektidentifizierung in verteilten hierarchischen Datenverarbeitungssystemen, insbesondere in Automatisierungssystemen.

Ein derartiges System und Verfahren kommt insbesondere im Bereich der Automatisierungstechnik zum Einsatz.

Aus der EP 0 737 916 Al sind Verfahren, Vorrichtungen und Datenstrukturen zur Verwaltung von transienten und persistenten verteilten Objekten bekannt. Es wird eine Datenstruktur beschrieben, die als Objektverweis dient und verschiedene Attribute zur Identifizierung und Lokalisierung eines Objekts verwaltet.

Der Erfindung liegt die Aufgabe zugrunde, eine Objektidentifizierung bei Operationen wie Verschieben, Kopieren, Umbenennen, etc. sicherzustellen.

Diese Aufgabe wird durch ein System mit den in Anspruch 1 angegebenen Merkmalen bzw. durch ein Verfahren mit den in Anspruch 9 angegebenen Merkmalen gelöst.

Der Erfindung liegt die Erkenntnis zugrunde, daß bisherige Lösungen eine geringe Stabilität und/oder einen hohen Änderungsaufwand aufweisen. Es gibt zwei prinzipielle Identifikationsmechanismen, die eingesetzt werden (und auch miteinander kombiniert werden können). Ein Verfahren beruht auf der Identifikation von Objekten durch die Vergabe eines global eindeutigen Identifikators für jedes Objekt. Mittels dieses globalen Identifikators ist sichergestellt, daß ein Objekt unabhängig von seinem momentanen Aufenthaltsort wiedergefunden werden kann. Dieses Verfahren hat folgende Nachteile:

- **Zentrale Verwaltung:** Das Verfahren benötigt zentrale Verwaltungsstrukturen wie eine Verwaltung der Objektidentifikatoren und Umsetztabellen der Objektidentifikatoren auf die Objekte.
- **Schlechte Unterstützung von verteilten Arbeiten:** Durch die Notwendigkeit einer zentralen Verwaltung wird das Aufteilen von Objektmengen, deren getrennte Bearbeitung und anschließende Zusammenführung (Stichwort Branch-and-Merge) erschwert.

Beim zweiten Verfahren wird ein Objekt durch seine relative Lage zu einem anderen identifiziert. Dadurch ist dann auch festgelegt, wie das Objekt aufzufinden ist. Im gegensatz zum ersten Verfahren besitzt ein Objekt kein eindeutigen Identifikator, sondern dieser abhängig vom jeweiligen Ausgangsobjekt, welches das andere referenziert. Dadurch ist keine zentrale Verwaltungsinformation notwendig. Jedoch ergeben sich folgende Nachteile:

- **Geringe Stabilität:** Durch Verwendung der relativen Lage zur Identifizierung wird der Identifikator (bzw. die Identifikatoren) beim Verschieben des Objekts ungültig und das Objekt ist nicht mehr verfügbar (Broken Link).
- **Hoher Änderungsaufwand:** Nach dem die Identifikatoren eines Objekts ungültig geworden sind, müssen diese durch eine Art Korrekturlauf berichtigt werden.

Bei der erfindunsgemäßen Lösung werden Kontexte zur Bildung mehrerer Indirektionsstufen zur Verwaltung der Identifikatoren eingeführt. Dadurch ergeben sich effiziente Verfahren zur Reparatur von "Broken Links" ohne die Einführung globaler, zentraler Verwaltungsfunktionen.

- **Keine zentrale Verwaltung:** Die Verwaltung erfolgt über die Kontexthierarchie. Das bedeutet, daß jeder Kontext alle notwendigen Informationen beinhaltet.
- **Unterstützung von verteiltem Arbeiten:** Die Kontexthierarchie ist beliebig zerlegbar und wieder zusammenfügbar.
  Dadurch ist ein Branch-and-Merge von Projekten problemlos durchführbar.
- **Geringer Änderungsaufwand:** Durch die Kontexthierarchie ist unmittelbar klar, wo Änderungen von Identifikatoren nachzuvollziehen sind. Die Änderungen sind auch nur an den betroffen Kontextobjekten durch zuführen.

Im folgenden wird die Erfindung anhand der in den Figuren dargestellten Ausführungsbeispiele näher beschrieben und erläutert.

Es zeigen:

FIG 1 ein Blockschaltbild zur Kennzeichnung des Sachverhalts: ein Client sieht Namen, ein Objektmodell arbeitet mit Ids,

FIG 2 eine schematische Darstellung für die Vergabe und Zuordnung von Objektidentifizierungen als Objekt IDs und

FIG 3 eine schematische Darstellung zum Verschieben eines Objekts mit der Bezeichnung "ES-Autol".

Im folgenden wird das Verfahren im Rahmen des OVA Engineering Objektmodells (OVA= Offene Verteilte Automatisierung) beschrieben. Es ist jedoch auch für andere Objektmodelle einsetzbar. Für ein besseres Verständnis der Zusammenhänge soll im folgenden kurz auf den Kontext der Erfindung eingegangen werden:

Für jedes Objekt gilt, daß es eine Umgebung gibt, in der er bekannt ist. Bei OVA wird diese Umgebung durch den Kontext modelliert. Innerhalb eines Kontexts sind Namen und Identifikatoren aller enthaltenen Objekte bekannt und eindeutig. In der Regel ist der Kontext durch den Einstiegspunkt bestimmt, den ein Anwender zur Bearbeitung seiner Automatisierungslösung wählt. Kontextinformation ist an jedem Containerobjekt (i.e. ein Objekt das andere Objekte enthält) wie H-Container, Chart oder Master verfügbar. Die kleinste Umgebung für einen Kontext ist jedoch ein Dokument. Für den Fall eingebetteter Objekte wird die Kontextinformation des umgebenden Dokuments verwendet. Hieraus ergibt sich jedoch auch, daß Kontextinformationen hierarchisch gegliedert sein können. Dabei sind tieferliegende Kontexte immer auch Teil des hierarchisch höheren Kontext. Darüber hinaus können weitere Kontexte, welche hierarchisch nicht verwandt sind, jedem beliebigen Kontext assoziiert werden. Dann kann dieser Kontext auf die Information des assoziierten Kontext zugreifen. Diese Assoziation ist jedoch unidirektional. Bei assoziierten Kontexten sind automatisch auch die (hierarchisch) enthaltenen Kontexte assoziiert.

Die Kontextinformation bestimmt, welche Objekte in dem Directory eingetragen sind. Der Inhalt des Dokuments gehört automatisch zum selben Kontext; das gilt insbesondere auch für gelinkte oder über eine Regel ("alle Objekte in diesem Verzeichnis", etc.) hinzugefügte Objekte.

Der Kontext ist auch der Verwalter der Kontext IDs. Diese werden später beschrieben.

### Objekt Identifikation

Da OVA ein standardisiertes Verfahren verwendet um auf die Datenhaltung zuzugreifen, ist es notwendig, die Objekte sicher identifizierbar zu gestalten. Der Grund hierfür ist, daß ein Teil der Daten Strukturinformation ist, zum Beispiel welches ES-Auto in welchem Chart liegt, oder welches Auto mit welchem verschaltet ist. Diese Strukturinformation unterliegt Regeln, die von der Implementierung des Datenmodells berücksichtigt werden. Bei der derzeitigen Realisierung durch die Verwendung des IStorage Interface als Schnittstelle zur Datenhaltung, ist es immer möglich, diese Struktur zu ändern, ohne das Datenmodell zu berücksichtigen. Zum Beispiel ist es einem Client möglich, Kopier-, Verschiebungs- oder Umbenennungsoperationen über das IStorage Interface vorzunehmen, ohne daß ein OVA Datenmodell-Server daran beteiligt ist. Das bringt das Problem mit sich, daß Inkonsistenzen entstehen können, die später von dem Anwender von Hand wieder richtig gestellt werden müssen.

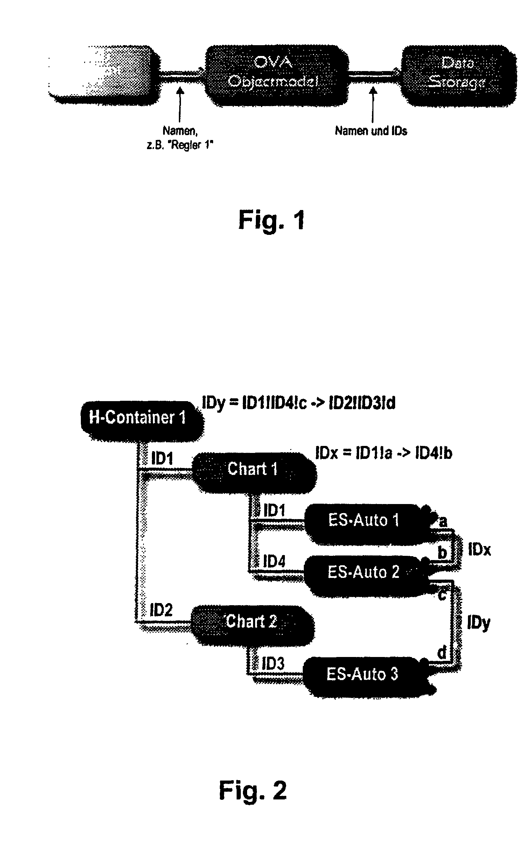

Daher stellt sich nun die Frage, wie die Konsistenz so weit wie möglich hergestellt werden kann, ohne dem Entwickler von ES-Autos oder OVA Werkzeugen hierfür einen übermäßigen Aufwand abzuverlangen. Auch sollten diese Mechanismen nicht an die Teile des API durchscheinen, die von den OVA Werkzeugen verwendet werden. Eine Client-Anwendung sollte beispielsweise immer mit den ES-Auto Namen hantieren nicht mit kryptischen IDs (siehe FIG 1).

### • Problematische Aktionen

Zuerst müssen die Aktionen beleuchtet werden, die potentielle Gefahren in sich bergen. Das sind zum einen alle unidirektionalen Beziehungen, und zum anderen Aktionen die an den Datenmodell-Servern "vorbeigehen".

• Unidirektionale Links

Unidirektionale Links sind problematisch, da es bei einer Aktion nicht ersichtlich ist, daß eine Inkonsistenz entsteht. Wird beispielsweise in einem Word-Dokument über einen Link auf eine Datei verwiesen, und diese Datei zu einem späteren Zeitpunkt umbenannt, bekommt das Word-Dokument hiervon nichts mit und wird die Datei nicht wiederfinden. Dieses Problem kann nur durch eine Zentrale Instanz beseitigt werden, die weiß, wo die Datei zu finden ist.

• "Dumme" Aktionen

Als dumme Aktionen werde hier Aktionen bezeichnet, die ohne das Wissen des Datenmodells ausgeführt werden. Als z.B. Umbenennen eines Objekts über das IStorage Interface (Istorage::RenameElement). Solche Aktionen sind bei standardisiertem Datenzugriff immer möglich. Auch hier könnte eine zentrale Instanz helfen, das Problem zu minimieren. Wichtig ist in beiden Fällen vor allem die Fehlererkennung, und wenn möglich auch eine Fehlerbehebung.

### • Object ID Moniker

Wie oben beschrieben, kann eine zentrale Stelle die Objekte so verwalten, daß sie (nahezu) eindeutig identifizierbar sind. Daher werden alle Objekte über Objekt IDs referenziert, die von der zentralen Stelle, in unserem Fall der Active Directory Service, aufgelöst werden können.

Diese ID ist von allen Aktionen unabhängig; sie wird bei der Objekterstellung vergeben und ändert sich dann nicht mehr, solange kein anderes Objekt mit der selben ID existiert. Dies wird jedoch nur beim Kopieren außerhalb des Datenmodells geschehen.

Jeder Container vergibt bei der Erstellung eines eingebetteten Objektes einen Namen.

FIG. 2 zeigt eine schematische Darstellung für die Vergabe und Zuordnung von Ojektidentifizierungen als Objekt Ids. Diese IDs, in der Abbildung ID1, ID2, ID3 und ID4 sind jeweils bei ihrem Container hinterlegt. Das heißt, der Hierarchiecontainer kennt ID1 und ID2, Chart 2 kennt ID3. Diese IDs sind dabei nur innerhalb des Containers auf der obersten Ebene eindeutig. Das heißt, Chart 1 kann auch wieder bei mit ID1 anfangen. Nun können einzelne Objekte über eine Kette von IDs identifiziert werden. ES-Auto 1 wird beispielsweise über /ID1!ID1 identifiziert. Die Verschaltung von ES-Auto 2 zu ES-Auto 3 (IDy) erhält folgende IDs :

$$IDy = /ID1!ID4!c \rightarrow /ID2!ID3!d$$

IDy ist nun eine Art Alias für die Verschaltung von ES-Auto 2 nach ES-Auto 3. Dieser wird bei dem hierarchisch niedrigst möglichen Container gespeichert. In diesem Falle ist das der H-Container 1, da sowohl Chart 1 als auch Chart 2 an der Verschaltung beteiligt sind.

Bei der Verschaltung IDx sind nur die beiden ES-Autos 1 und 2 beteiligt; daher kann die Information, wie IDx aufgelöst wird, bei Chart 1 gespeichert werden. Dieses Vorgehen, die Information so lokal wie möglich zu halten, hat den Vorteil, daß dieses Referenzen auch dann aufgelöst werden können, wenn nur ein Teilkontext geöffnet wird. In so einem Teilkontext sind so alle Referenzen, Verschaltungen, etc. bekannt, die innerhalb des Kontextes bleiben. Alle Referenzen nach außen (oder von außen) können nicht aufgelöst werden.

• Kontext IDs vs. lokale IDs

Wie in dem obigen Beispiel zu sehen ist, gibt es zwei verschiedene Arten von IDs. Zum einen die *lokalen* IDs, wie zum Beispiel ID1, ID2, ..., welche immer nur lokal dem Container bekannt sind. Zum anderen gibt es die *Kontext*-IDs, welche innerhalb des gesamten aktuellen Kontext ihre Gültigkeit besitzen. Beide IDs müssen in ihrer Umgebung eindeutig sein. Die lokalen auf Containerebene, die Kontext-IDs kontextweit.

• Auflösen

Eine ID muß zum Beispiel aufgelöst werden, wenn das Objekt aktiviert werden soll. So wird zum Beispiel ES-Auto 2 bei einem Konsistenzcheck seine Verschaltungen prüfen. Dazu muß IDx und IDy ermittelt werden. Um dies zu tun, erfragt ES-Auto 2 die einzelnen Objekte vom Kontext. Da die Veschaltungen als Moniker hinterlegt sind, genügt ein BindToObject() aus Sicht des ES-Autos:

```
        ...
        MkParseDisplayName („@objectID!IDy!Source", &pMoniker);
        pConnector = pMoniker->BindToObject ();
        ...
```

Da es sich bei den Monikern in diesem Fall um ObjectID Moniker handelt, wird der Server für ObjectID-Moniker, also der Kontext, nach dem Objekt gefragt. Dieser kennt IDy, da er für seine Speicherung zuständig ist und löst ihn in seine Bestandteile auf. Die Funktion ParseDisplayName extrahiert IDy und Source und stellt fest, daß dies /ID1! ID4!c ist. Nun werden die Container rekursiv nach diesem Objekt befragt.

Dieses etwas komplizierte Verfahren ist deshalb vorteilhaft, weil die (möglichen) Verschaltungen auch in den Teilkontexten zur Verfügung stehen. In dem obigen Beispiel könnte auch Chart 1 als Einstiegspunkt (Kontext) gewählt werden. Auf die Verschaltung IDx kann dann auch zugegriffen werden. IDy ist in diesem Falle eine externe Verschaltung, die solange nicht zur Verfügung steht, wir sich der Bearbeiter nur in dem Kontext von Chart 1 bewegt.

• ***Verwendung / Beispiele***

Nun werden die Auswirkungen an einigen Beispielen gezeigt. Die Aktionen sind Verschieben, Kopieren, Löschen und Umbenennen.

• Verschieben

Ausgangssituation ist **Fehler! Verweisquelle konnte nicht gefunden werden..** Nun wird ES-Auto 1 von Chart 1 in Chart 2 verschoben (siehe **Fehler! Verweisquelle konnte nicht gefunden werden.).** Dies erfolgt auf 2 verschiedene Arten. Zum einen in einem OVA Werkzeug, zum anderen an dem Datenmodell vorbei ("dummes Verschieben").

**Verschieben im OVA Werkzeug**

Wird in einem OVA Werkzeug der Verschiebungsvorgang angestoßen, übernehmen die Server des Datenmodells die Aktion und sorgen somit dafür, daß alle Referenzen gültig bleiben. Als Agitatoren sind hier die beiden Charts im Spiel. Im Source Chart wird die Methode MoveESAuto angestoßen.. Ihr wird das ES-Auto und der Ziel-Chart mitgegeben:

```
        ...

    pChart1->MoveESAuto („ESAuto 1", pChart2);

        ...
```

In der Methode MoveESAuto sind nun alle notwendigen Schritte gekapselt. Das sind zuerst das kopieren des ES-Autos in Chart 2, dann das Löschen des ursprünglichen Autos aus Chart 1 und zuletzt die Anpassung der IDs. Da sich bei einer solchen Aktion immer nur die IDs bis zu dem Objekt, an dem die Aktion ausgeführt wurde, verändern können, muß auch nur dies dem Kontext mitgeteilt werden:

```
    ...

pContext->UpdateReference („ID1!ID1", „ID2!ID4");

    ...
```

Diese Methode veranlaßt den Kontext, alle IDs, die mit "ID1!ID1" beginnen, auf "ID2!ID4" zu ändern.

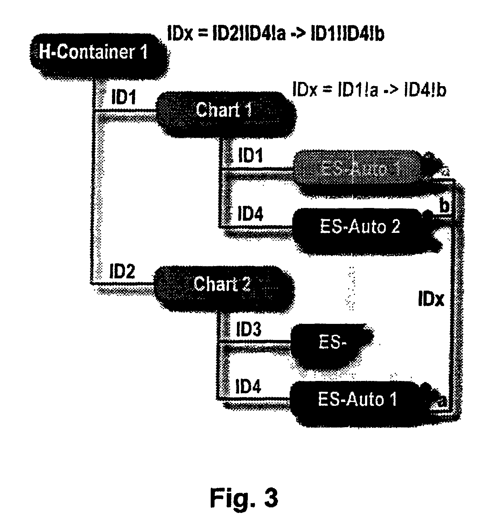

FIG 3 zeigt eine schematische Darstellung zum Verschieben eines Objekts mit der Bezeichnung "ES-Auto1".

**"Dummes" Verschieben.**

Beim "dummen" Kopieren sind die Server des Objektmodells nicht beteiligt. Daher kann der Update der IDs zu diesem Zeitpunkt auch nicht durchgeführt werden. Um eine solche Aktion auszuführen genügt es, die persistente Datenablage von ES-Auto 1 aus der Ablage von Chart 1 in die von Chart 2 zu verschieben. Bei einem Öffnen von Chart 1 wird dieser ES-Auto 1 nicht mehr anzeigen und seinen Eintrag zu "ID1" löschen. Beim Öffnen von Chart 2 wird dieser feststellen, daß ein ES-Auto in seiner Datenablage hinzugekommen ist, für das noch keine ID vergeben ist. Daher wird ES-Auto 1 nun eine ID zugeordnet. Ferner müssen noch die Referenzen von ES-Auto 1 und den beteiligten Partnern ersetzt werden. Im Falle von bidirektionalen IDs ist dies kein Problem. Wird ES-Auto 1 nach seinen externen Referenzen gefragt, wird es IDx zurückgeben. Wenn der Kontext nach dieser ID gefragt wird, kann er nur einen Teil ("ID1!ID4") unmittelbar auflösen. "ID1!ID1" zeigt zu diesem Zeitpunkt noch ins Leere. Da die Aktion aber durch eine Überprüfung von ES-Auto 1 ausgelöst wurde, kann dies behoben werden (evtl. nach Rückfrage an den Benutzer):

```
...

Foreach id In pESAuto1->GetExternalRefs ()

        bOK = CheckReference (id.Source);

        if ! bOK

                UpdateReference (id.Source, „ID2!ID4");

        Endif


        bOK = CheckReference (id.Destination);

        if ! bOK

                UpdateReference (id.Destination, „ID2!ID4");

        Endif

Endfor
```

• Kopieren

Auch beim Kopieren sollen beide Wege untersucht werden:

**Kopieren im OVA Werkzeug**

Wird ES-Auto 1 nur kopiert, ist an den Referenzen nichts zu ändern. Beim Ziel ES-Auto muß Chart 2 eine neue ID vergeben (bspw. ID4). Ferner sollten alle externen Referenzen des neuen ES-Autos gelöscht.

**"Dummes" Kopieren**

Wird ES-Auto 1 wie beim Verschieben wiederum am Objektmodell vorbei kopiert, verweisen 2 ES-Autos auf ES-Auto 2. Dies ist jedoch kein Problem, da auch hier Chart 2 feststellt, daß ihm ES-Auto 1 noch nicht bekannt ist (keine ID). Wie beim Verschieben, wird er nun eine neue ID vergeben und die externen Referenzen des ES-Autos testen. In diesem Falle existiert jedoch ES-Auto 1 auch in Chart 1. Daher wird dieser Check keinen Fehler zurückgeben. Daher muß geprüft werden, ob das unbekannte ES-Auto Teil der externen Referenz ist. Der Code von oben muß also noch etwas erweitert werden:

```
        ...

        Foreach id In pESAuto1->GetExternalRefs ()
                bOK = CheckReference (id.Source);
                If ! bOK
                        UpdateReference (id.Source, „ID2!ID4");
                else
                        If ! IsReferenceParticipant („ID2!ID4")
                                pESAuto1->RemoveReference(„ID2!ID4");
                        Endif
                Endif


                bOK = CheckReference (id.Destination);
                if ! bOK
                        UpdateReference (id.Destination, „ID2!ID4");
                else
                        If ! IsReferenceParticipant („ID2!ID4")
                                pESAuto1->RemoveReference(„ID2!ID4");
                        Endif
                Endif
        Endfor
```

• Löschen

Beim Löschen eines ES-Autos fallen folgende Schritte an:

**Löschen im OVA Werkzeug**

Wird das ES-Auto gelöscht, können unmittelbar auch alle Referenzen gelöscht werden. Dabei wird dem Kontext mitgeteilt, daß eine bestimmte ID nicht mehr gültig ist. Dieser kann nun allen (nach Benutzerrückfrage) Objekten, die eine Refernez uf diese ID haben, die Mitteilung weiterreichen, daß die ID ungültig ist. Wenn beispielsweise in **Fehler! Verweisquelle konnte nicht gefunden werden.** ES-Auto 1 gelöscht wird, muß folgender Code ausgeführt werden:

```
                RemoveReference („ID1!ID1");

                ...
```

Dieser Aufruf hat zur Folge, daß der Kontext bei allen Partnern die Methode RemoveExternalReference () aufruft.

**"Dummes" Löschen**

Beim dummen Löschen können zwei Situationen auftreten: entweder wird Chart 1 zuerst geöffnet. Dieser stellt fest, daß zu der ID1 kein ES-Auto mehr existiert. Er löscht nun seinen Eintrag "ID1".
Andererseits kann ein Objekt versuchen, die Referenz aufzulösen (z.b. ES-Auto 2). Da dies nicht möglich ist, wird der Benutzer gefragt, was mit ES-Auto 1 passiert ist, und was mit der Referenz geschehen soll.

• Umbenennen

Umbenennen verhält sich wie Verschieben.

Zusammenfassend betrifft die Erfindung somit ein System und Verfahren zur Objektidentifizierung in verteilten hierarchischen Systemen, insbesondere in Automatisierungssystemen. Zur Sicherstellung einer Objektidentifizierung bei Operationen wie Verschieben, Kopieren, Umbenennen, etc. wird vorgeschlagen, daß Kontexte zur Bildung mehrerer Indirektionsstufen zur Verwaltung von Identifikatoren eingeführt werden. Dadurch ergeben sich effiziente Verfahren zur Reparatur von sogenannten "Broken Links" ohne die Einführung globaler, zentraler Verwaltungsfunktionen.

**Patentansprüche**

1. System zur Identifizierung von Objekten in verteilten hierarchischen Datenverarbeitungssystemen, insbesondere in Automatisierungssystemen, welches Identifikatoren zur Kennzeichnung der Objekte und Kontexte zur Verwaltung der Identifikatoren enthält, wobei die Kontexte mehrere Indirektionsstufen bilden und innerhalb eines Kontexts Namen und Identifikatoren aller enthaltenen Objekte bekannt und eindeutig sind.

2. System nach Anspruch 1,
   **dadurch gekennzeichnet,**
   **dass** das System Containerobjekte aufweist und dass Kontextinformationen an jedem Containerobjekt verfügbar sind, wobei die Containerobjekte andere Objekte enthalten und wobei die Kontextinformationen hierarchisch gegliedert sind.

3. System nach Anspruch 1 oder 2,
   **dadurch gekennzeichnet,**
   **dass** weitere Kontexte, welche hierarchisch nicht verwandt sind, jedem beliebigen Kontext unidirektional assoziiert werden können, wobei die weiteren Kontexte auf die Information des assoziierten Kontexts zugreifen können.

4. System nach einem der vorhergehenden Ansprüche,
   **dadurch gekennzeichnet,**
   **dass** den Objekten lokale Objektidentifizierungen (ID1, ID2, ID3, ID4) zugeordnet sind, welche beim hierarchisch niedrigst möglichen Containerobjekt, welches die Objekte enthält, hinterlegt sind, wobei die Objekte über eine Kette von Objektidentifizierungen (ID1, ID2, ID3, ID4) identifizierbar sind.

5. System nach einem der vorhergehenden Ansprüche,
   **dadurch gekennzeichnet,**
   **dass** Kontexte zur Verwaltung von Kontextidentifizierungen vorgesehen sind, wobei die Kontextidentifizierungen Objekten im Kontext zugeordnet sind und innerhalb des Kontexts gültig und eindeutig sind.

6. System nach einem der vorhergehenden Ansprüche,
   **dadurch gekennzeichnet,**
   **dass** Verschaltungen der Objekte als Moniker ausgeführt sind.

7. System nach einem der vorhergehenden Ansprüche,
   **dadurch gekennzeichnet,**
   **dass** ein Dokument als kleinste Umgebung für einen Kontext vorgesehen ist, wobei für in das Dokument eingebettete Objekte die Kontextinformation des umgebenden Dokuments verwendet wird und das Dokument dem eingebetteten Dokument einen Namen vergibt.

8. System nach einem der vorhergehenden Ansprüche,
   **dadurch gekennzeichnet,**
   **dass** die Kontexte zur Verwaltung der Identifikatoren der Objekte bei Operationen mit Objekten wie Verschieben, Kopieren, Umbenennen, etc. vorgesehen sind, wobei keine globalen, zentralen Verwaltungsfunktionen vorgesehen sind.

9. Verfahren zur Identifizierung von Objekten in verteilten hierarchischen Datenverarbeitungssystemen, insbesondere in Automatisierungssystemen, bei welchem Objekte mit Identifikatoren gekennzeichnet werden und Kontexte die Identifikatoren verwalten, wobei die Kontexte mehrere Indirektionsstufen bilden und innerhalb eines Kontexts Namen und Identifikatoren aller enthaltenen Objekte bekannt und eindeutig sind.

**10.** Verfahren nach Anspruch 9,
**dadurch gekennzeichnet,**
**dass** Containerobjekte andere Objekte enthalten und dass Kontextinformationen an jedem Containerobjekt verfügbar sind, wobei die Kontextinformationen hierarchisch gegliedert sind.

**11.** Verfahren nach Anspruch 9 oder 10,
**dadurch gekennzeichnet,**
**dass** weitere Kontexte, welche hierarchisch nicht verwandt sind, jedem beliebigen Kontext unidirektional assoziiert werden können, wobei die weiteren Kontexte auf die Information des assoziierten Kontexts zugreifen können.

**12.** Verfahren nach einem der Ansprüche 9 bis 11,
**dadurch gekennzeichnet,**
**dass** den Objekten lokale Objektidentifizierungen (ID1, ID2, ID3, ID4) zugeordnet sind, welche beim hierarchisch niedrigst möglichen Containerobjekt, welches die Objekte enthält, hinterlegt sind, wobei die Objekte über eine Kette von Objektidentifizierungen (ID1, ID2, ID3, ID4) identifizierbar sind.

**13.** Verfahren nach einem der Ansprüche 9 bis 12,
**dadurch gekennzeichnet,**
**dass** Kontexte Kontextidentifizierungen verwalten, wobei die Kontextidentifizierungen Objekten im Kontext zugeordnet sind und innerhalb des Kontexts gültig und eindeutig sind.

**14.** Verfahren nach einem der Ansprüche 9 bis 13,
**dadurch gekennzeichnet,**
**dass** Verschaltungen der Objekte als Moniker ausgeführt sind.

**15.** Verfahren nach einem der Ansprüche 9 bis 14,
**dadurch gekennzeichnet,**
**dass** ein Dokument als kleinste Umgebung für einen Kontext vorgesehen ist, wobei für in das Dokument eingebettete Objekte die Kontextinformation des umgebenden Dokuments verwendet wird und das Dokument dem eingebetteten Dokument einen Namen vergibt.

**16.** Verfahren nach einem der Ansprüche 9 bis 15,
**dadurch gekennzeichnet,**
**dass** die Kontexte die Identifikatoren der Objekte bei Operationen mit Objekten wie Verschieben, Kopieren, Umbenennen, etc. verwalten, wobei keine globalen, zentralen Verwaltungsfunktionen vorgesehen sind.

**Claims**

**1.** System for identifying objects in distributed hierarchical data-processing systems, in particular in automation systems, said system containing identifiers for identifying objects and contexts to manage the identifiers, whereby the contexts form a plurality of indirection stages and within a context names and identifiers of all contained objects are known and unique.

**2.** System according to Claim 1, **characterised in that** the system has container objects and that context information is available at each container object, whereby the container objects contain other objects and whereby the context information is structured hierarchically.

**3.** System according to Claim 1 or 2, **characterised in that** further contexts, not related hierarchically, can be associated unidirectionally with any context, whereby the further contexts can access the information of the associated context.

**4.** System according to one of the preceding claims, **characterised in that** local object identifications (ID1, ID2, ID3, ID4) are assigned to the objects, said identifications being stored with the hierarchically lowest possible container object containing the objects, whereby the objects can be identified using a chain of object identifications (ID1, ID2, ID3, ID4).

5. System according to one of the preceding claims, **characterised in that** contexts are provided for managing context identifications, whereby the context identifications are assigned to objects in the context and are valid and unique within the context.

6. System according to one of the preceding claims, **characterised in that** connections between the objects are executed as monikers.

7. System according to one of the preceding claims, **characterised in that** a document is provided as the smallest environment for a context, whereby for objects embedded in the document the context information of the surrounding document is used and the document assigns a name to the embedded document.

8. System according to one of the preceding claims, **characterised in that** the contexts are provided with objects such as move, copy, rename, etc. for managing the identifiers of the objects during operations, whereby no global, central management functions are provided.

9. Method for identifying objects in distributed hierarchical data-processing systems, in particular in automation systems, in which objects are marked with identifiers and contexts manage the identifiers, whereby the contexts form a plurality of indirection stages and within a context names and identifiers of all contained objects are known and unique.

10. Method according to Claim 9, **characterised in that** container objects contain other objects and that context information is available at each container object, whereby the context information is structured hierarchically.

11. Method according to Claim 9 or 10, **characterised in that** further contexts, not related hierarchically, can be associated unidirectionally with any context, whereby the further contexts can access the information of the associated context.

12. Method according to one of Claims 9 to 11, **characterised in that** local object identifications (ID1, ID2, ID3, ID4) are assigned to the objects, said identifications being stored with the hierarchically lowest possible container object containing the objects, whereby the objects can be identified using a chain of object identifications (ID1, ID2, ID3, ID4).

13. Method according to one of Claims 9 to 12, **characterised in that** contexts manage context identifications, whereby the context identifications are assigned to objects in the context and are valid and unique within the context.

14. Method according to one of Claims 9 to 13, **characterised in that** connections between the objects are executed as monikers.

15. Method according to one of Claims 9 to 14, **characterised in that** a document is provided as the smallest environment for a context, whereby for objects embedded in the document the context information of the surrounding document is used and the document assigns a name to the embedded document.

16. Method according to one of Claims 9 to 15, **characterised in that** the contexts manage the identifiers of the objects during operations with objects such as move, copy, rename, etc., whereby no global, central management functions are provided.

## Revendications

1. Système pour l'identification d'objets dans des systèmes de traitement de données hiérarchiques répartis, notamment dans des systèmes d'automatisation, qui contient des identificateurs pour caractériser les objets et des contextes pour gérer les identificateurs, les contextes formant plusieurs niveaux d'identification et, à l'intérieur d'un contexte, les noms et identificateurs de tous les objets contenus étant connus et uniques.

2. Système selon la revendication 1, **caractérisé par le fait que** le système comporte des objets conteneurs et que des informations de contexte sont disponibles au niveau de chaque objet conteneur, les objets conteneurs contenant d'autres objets et les informations de contexte étant décomposées de façon hiérarchique.

3. Système selon la revendication 1 ou 2, **caractérisé par le fait que** d'autres contextes qui ne sont pas apparentés de façon hiérarchique peuvent être associés de façon unidirectionnelle à n'importe quel contexte, les autres contextes pouvant accéder à l'information du contexte associé.

4. Système selon l'une des revendications précédentes, **caractérisé par le fait qu'**il est associé aux objets des identifications d'objets locales (ID1, ID2, ID3, ID4) qui sont enregistrées au niveau de l'objet conteneur qui contient les objets et qui est le plus bas possible hiérarchiquement, les objets étant identifiables par l'intermédiaire d'une chaîne d'identifications d'objets (ID1, ID2, ID3, ID4).

5. Système selon l'une des revendications précédentes, **caractérisé par le fait que** des contextes sont prévus pour la gestion d'identifications de contextes, les identifications de contextes étant associées à des objets dans le contexte et étant valables et uniques à l'intérieur du contexte.

6. Système selon l'une des revendications précédentes, **caractérisé par le fait que** des branchements des objets sont réalisés comme des Monikers.

7. Système selon l'une des revendications précédentes, **caractérisé par le fait qu'**il est prévu un document comme plus petit environnement pour un contexte, l'information de contexte du document environnant étant utilisée pour des objets intégrés dans le document et le document prescrivant un nom au document intégré.

8. Système selon l'une des revendications précédentes, **caractérisé par le fait que** les contextes sont prévus pour la gestion des identificateurs des objets lors d'opérations avec des objets comme déplacer, copier, renommer, etc., aucune fonction de gestion centrale globale n'étant prévue.

9. Procédé pour l'identification d'objets dans des systèmes de traitement de données hiérarchiques répartis, notamment dans des systèmes d'automatisation, dans lequel des objets sont caractérisés avec des identificateurs et des contextes gèrent les identificateurs, les contextes formant plusieurs niveaux d'identification et, à l'intérieur d'un contexte, les noms et identificateurs de tous les objets contenus étant connus et uniques.

10. Procédé selon la revendication 9, **caractérisé par le fait que** des objets conteneurs contiennent d'autres objets et que des informations de contexte sont disponibles au niveau de chaque objet conteneur, les informations de contexte étant décomposées de façon hiérarchique.

11. Procédé selon la revendication 9 ou 10, **caractérisé par le fait que** d'autres contextes qui ne sont pas apparentés de façon hiérarchique peuvent être associés de façon unidirectionnelle à n'importe quel contexte, les autres contextes pouvant accéder à l'information du contexte associé.

12. Procédé selon l'une des revendications 9 à 11, **caractérisé par le fait qu'**il est associé aux objets des identifications d'objets locales (ID1, ID2, ID3, ID4) qui sont enregistrées au niveau de l'objet conteneur qui contient les objets et qui est le plus bas possible hiérarchiquement, les objets étant identifiables par l'intermédiaire d'une chaîne d'identifications d'objets (ID1, ID2, ID3, ID4).

13. Procédé selon l'une des revendications 9 à 12, **caractérisé par le fait que** des contextes gèrent des identifications de contextes, les identifications de contextes étant associées à des objets dans le contexte et étant valables et uniques à l'intérieur du contexte.

14. Procédé selon l'une des revendications 9 à 13, **caractérisé par le fait que** des branchements des objets sont réalisés comme des Monikers.

15. Procédé selon l'une des revendications 9 à 14, **caractérisé par le fait qu'**il est prévu un document comme plus petit environnement pour un contexte, l'information de contexte du document environnant étant utilisée pour des objets intégrés dans le document et le document prescrivant un nom au document intégré.

16. Procédé selon l'une des revendications 9 à 15, **caractérisé par le fait que** les contextes gèrent les identificateurs des objets lors d'opérations avec des objets comme déplacer, copier, renommer, etc., aucune fonction de gestion centrale globale n'étant prévue.

**Fig. 1**

Namen,
z.B. "Regler 1"

Namen und IDs

IDy = ID1IID4!c -> ID2IID3Id

IDx = ID1!a -> ID4!b

**Fig. 2**

Fig. 3